(19) Europäisches Patentamt
European Patent Office
Office européen des brevets

(11) **EP 3 418 959 A1**

(12) **EUROPEAN PATENT APPLICATION**

(43) Date of publication:
**26.12.2018 Bulletin 2018/52**

(51) Int Cl.:
*G06Q 10/06* (2012.01)   *G06Q 10/04* (2012.01)

(21) Application number: **18178215.2**

(22) Date of filing: **18.06.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.06.2017   US 201715629854**

(71) Applicant: **The Boeing Company
Chicago, IL 60606-1596 (US)**

(72) Inventor: **BASANETS, Oleksandr
Chicago, IL Illinois 60606-1596 (US)**

(74) Representative: **Morrall, Jonathan Ian McLachlan
et al
Kilburn & Strode LLP
Lacon London
84 Theobalds Road
London WC1X 8NL (GB)**

(54) **FLIGHT SCHEDULE DETERMINING SYSTEMS AND METHODS**

(57)     An adaptive scheduling system (100) is configured to adaptively schedule flights for aircraft (10), and includes a flight history database (102) that stores historical data regarding one or both of the aircraft and one or more locations to and from which the aircraft (10) travels, and a delay determination control unit (108) in communication with the flight history database (102). The delay determination control unit (108) is configured to predict one or more delays for the aircraft (10) based on an analysis of the historical data. The delay determination control unit (108) is further configured to generate delay data for the aircraft (10) indicative of the delay(s). A robustness determination control unit (110) is in communication with the delay determination control unit (108). The robustness determination control unit (110) is configured to generate at least one robustness index based on the delay data. The robustness index(es) is used to adaptively schedule the flights for the aircraft (10).

**FIG. 1**

**Description**

FIELD OF THE DISCLOSURE

Embodiments of the present disclosure generally relate to systems and methods for scheduling flights for aircraft, and, more particularly, to systems and methods for adaptively scheduling flights based on prior delays and other such disruptions.

BACKGROUND OF THE DISCLOSURE

Vehicles are used to transport individuals between locations. For example, commercial aircraft are used to transport passengers between various locations.

In various industries, assigning personnel (for example, employees) to tasks or jobs may be limited by particular predefined limits. For example, commercial airline pilots are subject to several particular limits related to a length of time they can be on duty. Such limits may prevent or otherwise restrict the ability to schedule pilots to particular flight segments.

During a particular day, a pilot is assigned to a flight duty, which may include multiple legs (that is, flight segments). For example, the duty may include a first leg separated from a second leg by a ground time. The first leg may be a particular flight from a first location to a second location. The second leg may be a particular flight from the second location to another location, such as a third location. However, if the first leg is delayed, there may not be sufficient ground time between the legs. As such, the pilot or flight crew may be precluded from flying the second leg during that particular duty period. Consequently, the flight represented by the second leg may be canceled.

As can be appreciated, when a delay occurs to a particular leg of a duty, the delay propagates along an entire schedule for the duty, thereby delaying subsequent flights represented by legs within the duty. Flight delays have a ripple effect that may lead to additional flight delays or even cancellations. Typically, such flight delays are realized on the particular days of the particular flights. Passengers may be forced to change travel plans based on the flight delays. Further, flight crews may be unable to operate aircraft due to previous flight delays during a duty, due to various operational rules, such as those promulgated by the U.S. Federal Aviation Administration.

SUMMARY OF THE DISCLOSURE

A need exists for a system and method for determining potential flight delays, and adaptively scheduling legs of a duty based on the potential flight delays. Further, a need exists for a system and method for reducing the possibility of flight personnel (such as pilots) from being prevented from completing legs of a duty due to potential flight delays. Moreover, a need exists for a system and method for determining flight schedules (that accounts for flight delay propagations) for flight personnel that reduce potential conflicts with particular operational rules between legs of a duty.

With those needs in mind, certain embodiments of the present disclosure provide an adaptive scheduling system that is configured to adaptively schedule flights for an aircraft, and accounts for flight delay propagations. The adaptive scheduling system includes a flight history database that stores historical data regarding one or both of the aircraft and one or more locations to and from which the aircraft travels. A delay determination control unit is in communication with the flight history database. The delay determination control unit is configured to predict one or more delays for the aircraft based on an analysis of the historical data. The delay determination control unit is further configured to generate delay data for the aircraft indicative of the delay(s). A robustness determination control unit is in communication with the delay determination control unit. The robustness determination control unit is configured to generate at least one robustness index based on the delay data. The robustness index(es) is used to adaptively schedule the flights for the aircraft. In at least one embodiment, a scheduling control unit uses the robustness index(es) to adaptively schedule the flights.

The flight history database may include a vehicle history storage unit that stores flight data for the aircraft, and a location history storage unit that stores location history data regarding arrival and departure history for one or more locations.

In at least one embodiment, the robustness determination control unit is configured to generate the robustness index(es) for one or both of at least one duty and at least one leg within the at least one duty.

In at least one embodiment, the delay determination control unit is configured to generate the delay data by determining at least one delay propagation index for one or both of at least one duty and at least one leg of the at least one duty. The delay determination control unit may be configured to determine the delay propagation index(es) for the at least one leg by determining a difference between a forecasted arrival time and a scheduled arrival time. The delay determination control unit may be further configured to define the delay propagation index(es) in relation to a last flight in the at least one duty. The delay determination control unit may be further configured to determine a forecasted departure time for each leg within a duty, a forecasted arrival time for each leg within the duty, and a median value of historical time distribution for each leg within the duty.

The robustness determination control unit may be configured to determine a plurality of robustness indices. Examples of robustness indices include a duty block time robustness index, a duty duty time robustness index, a duty rest time robustness index, and a flight connection time robustness index.

Certain embodiments of the present disclosure provide an adaptive scheduling method that is configured to adaptively and recursively schedule flights for an aircraft. The adaptive scheduling method includes storing historical data regarding one or both of the aircraft and one or more locations to and from which the aircraft travels in a flight history database, communicatively coupling a delay determination control unit with the flight history database, and predicting (by the delay determination control unit) one or more delays for the aircraft based on an analysis of the historical data. The predicting includes generating, by the delay determination control unit, delay data for the vehicle indicative of the one or more delays. The method may also include communicatively coupling a robustness determination control unit with the delay determination control unit, generating (by the robustness determination control unit) at least one robustness index based on the delay data, and using the robustness index(es) to adaptively schedule the flights for the aircraft.

BRIEF DESCRIPTION OF THE DRAWINGS

Figure 1 is a diagrammatic representation of a front perspective view of an aircraft, according to an exemplary embodiment of the present disclosure.

Figure 2 is a schematic representation of an adaptive scheduling system, according to an exemplary embodiment of the present disclosure.

Figure 3 is a block diagram of an initially-scheduled duty for a vehicle operator, according to an embodiment of the present disclosure.

Figure 4 is a block diagram of an actual duty in relation to an initially-scheduled duty for a vehicle operator, according to an embodiment of the present disclosure.

Figure 5 is an exemplary graph of a historical block time distribution for a trip, according to an embodiment of the present disclosure.

Figure 6 is an exemplary graph of actual turn time vs available turn time scatterplot for a particular station, according to an embodiment of the present disclosure.

Figure 7 is a block diagram illustrating a block time robustness index, according to an embodiment of the present disclosure.

Figure 8 is a block diagram illustrating a duty duty time robustness index, according to an embodiment of the present disclosure.

Figure 9 is a block diagram illustrating a duty rest time robustness index, according to an embodiment of the present disclosure.

Figure 10 is a block diagram illustrating a flight connection time robustness index, according to an embodiment of the present disclosure.

Figure 11 illustrates a flow chart of an adaptive scheduling method, according to an embodiment of the present disclosure.

DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition may include additional elements not having that condition.

Embodiments of the present disclosure provide systems and methods that are configured to determine potential flight delays, and estimate the extent that such delay(s) propagates in relation to flight schedules, such as with respect to an assigned duty for flight personnel. The systems and methods determine potential flight delays and allocate one or more index of delay propagation to one or more duties (and/or each leg within the duties). The systems and methods according to embodiments of the present disclosure generate one or more flight duty robustness indexes.

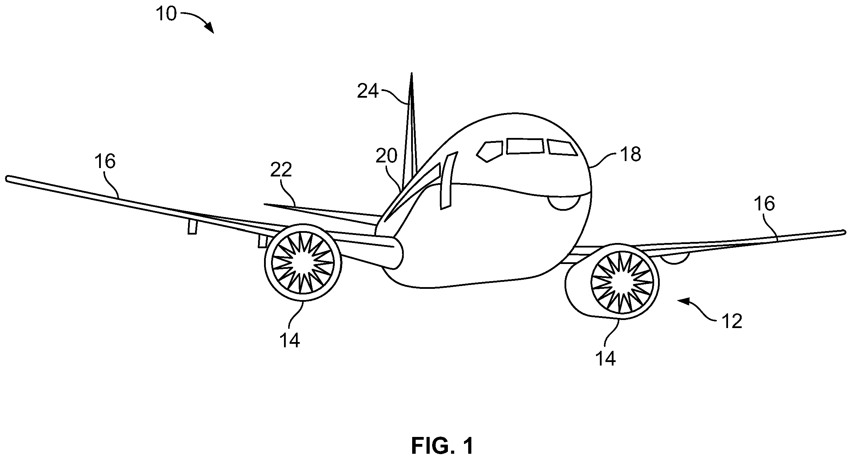

Figure 1 is a diagrammatic representation of a front perspective view of a vehicle, such as an aircraft 10, according to an exemplary embodiment of the present disclosure. The aircraft 10 includes a propulsion system 12 that may include two turbofan engines 14, for example. Optionally, the propulsion system 12 may include more engines 14 than shown. The engines 14 are carried by wings 16 of the aircraft 10. In other embodiments, the engines 14 may be carried by a fuselage 18 and/or an empennage 20. The empennage 20 may also support horizontal stabilizers 22 and a vertical stabilizer 24.

The fuselage 18 of the aircraft 10 defines an interior cabin, which may include a cockpit, one or more work sections (for example, galleys, personnel carry-on baggage areas, and the like), one or more passenger sections (for example, first class, business class, and economy sections), and an aft section. Each of the sections may be separated by a cabin transition area, which may include one or more class divider assemblies. Overhead stowage bin assemblies may be positioned throughout the interior cabin.

Alternatively, instead of an aircraft, embodiments of the present disclosure may be used with various other vehicles, such as automobiles, buses, locomotives and train cars, seacraft, spacecraft, and the like.

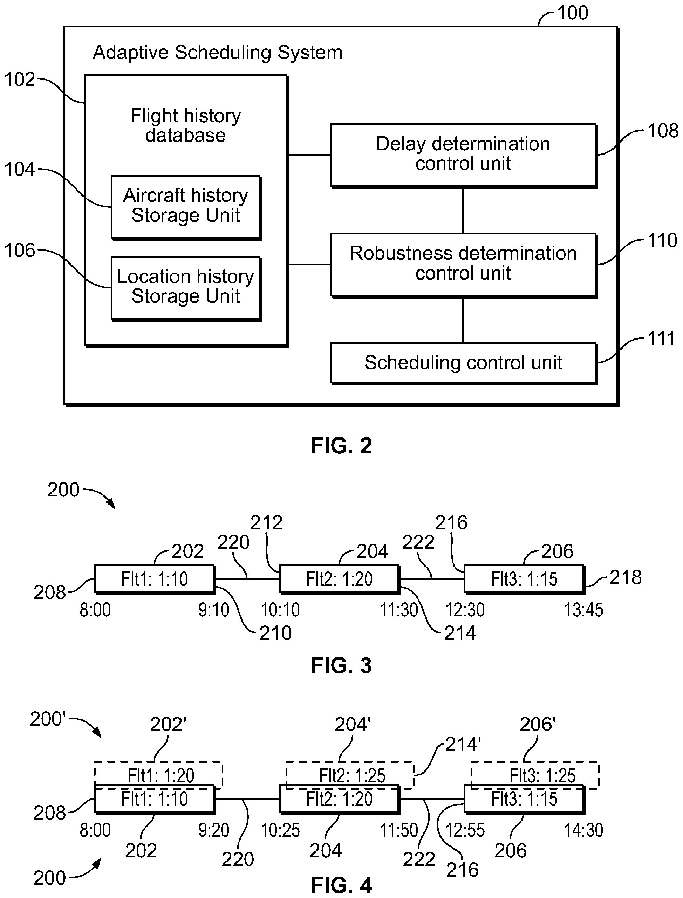

Figure 2 is a schematic representation of an adaptive scheduling system 100, according to an exemplary embodiment of the present disclosure. The adaptive scheduling system 100 is used to adaptively determine one or more schedules for one or more vehicles (such as the aircraft 10 shown in Figure 1) based on an analysis of past trip delays.

The adaptive scheduling system 100 includes a flight history database 102. The flight history database 102 includes a vehicle (for example, aircraft) history storage unit 104, and a location history storage unit 106. The vehicle history storage unit 104 and the location history storage unit 106 may be separate and distinct memory locations within the flight history database 102. Optionally, the vehicle history storage unit 104 and the location history storage unit 106 may be part of a single memory location of the flight history database 102. Alternatively, the flight history database 102 may not include both of the vehicle history storage unit 104 and the location history storage unit 106.

The vehicle history storage unit 104 stores trip history data for one or more vehicles. For example, referring to Figures 1 and 2, the vehicle history storage unit 104 may store trip history data regarding one or more flights for the aircraft 10 and/or other aircraft. The trip history data may include a number of flights flown by the aircraft(s) (for example, X number of flights flown), dates of the flights, total flight times of the flights (for example, Y hours of air time), delays experienced, and/or the like.

The location history storage unit 106 stores location data (such as arrival and departure history data for one or more locations, such as airports). For example, the location history storage unit 106 may store location data regarding inbound and outbound flights in relation to one or more particular airports. The location data may include a number of arrivals and departures at an airport(s), dates of the arrivals and the departures, delays at the airport(s), and/or the like.

The adaptive scheduling system 100 also includes a delay determination control unit 108 that is in communication with the flight history database 102, such as through one or more wired or wireless connections. The delay determination control unit 108 analyzes the flight data stored in the vehicle history storage unit 104 and/or the location data stored in the location history storage unit 106 to determine potential delays for one or more trip duties (such as flight duties), and one or more legs of the duties. For example, the delays determination control unit 108 analyzes the flight data and/or the location data to determine median or average delays for one or more duties and/or one or more legs of the duties, based on historical data as defined by the flight data and/or the location data.

The adaptive scheduling system 100 also includes a robustness determination control unit 110 that is in communication with the delay determination control unit 108 through one or more wired or wireless locations. The robustness determination control unit 110 may also be in communication with the flight history database 102 through one or more wired or wireless connections. After the delay determination control unit 108 determines one or more potential delays for one or more duties and/or one or more legs of the duties, the robustness determination control unit 110 determines at least one robustness index for one or more scheduled duties and/or one or more legs of the duties. The robustness relates to a capability of the scheduled duties and/or legs to satisfy particular limits set for the duties and/or legs. By determining the robustness for the scheduled duties and/or legs, the robustness determination control unit 110 is able to adapt the duties and/or the legs (for example, adaptively scheduling or re-scheduling) to ensure that the duties and/or the legs are efficiently assigned while at the same time satisfying the particular pre-set limits.

In operation, the delay determination control unit 108 determines potential delays for scheduled duties and/or legs for vehicle personnel based on historical vehicle flight data and/or location data stored in the flight history database 102. After the potential delays are determined by the delay determination control unit 108, the robustness determination control unit 110 analyzes the determined potential delays, and then generates one or more robustness metrics, which are then used to adapt the scheduled duties and/or legs based on the determined potential delays.

The adaptive scheduling system 100 may be located at a central land-based monitoring station, such as at an airport. Optionally, the adaptive scheduling system 100 may be onboard a vehicle, such as aircraft 10. In at least one embodiment, one or both of the delay determination control unit 108 and/or the robustness determination control unit 110 may be onboard a vehicle, while the flight history database 102 may be remotely located therefrom, such as at a land-based monitoring station. Optionally, at least a portion of the flight history database 102, such as the vehicle history storage unit 104, may be onboard the vehicle. In at least one embodiment, the delay determination control unit 108 and the robustness determination control unit 110 may be in communication with the flight history database 102 through various communication networks, such as, but not limited to, the Internet.

As described herein, the adaptive scheduling system 100 is configured to adaptively schedule trips (for example, duties and legs within the duties) for a vehicle, such as an aircraft. The adaptive scheduling system 100 includes the flight history database 102, which stores historical data regarding the vehicle and/or one or more locations (for example airports) to and from which the vehicle travels. The delay determination control unit 108 is in communication with the flight history database 102. The delay determination control unit 108 is configured to predict one or more delays for the vehicle based on an analysis of the historical data. The delay determination control unit 108 is further configured to generate delay data for the vehicle indicative of the delay(s). The robustness determination control unit 110 is in communication with the delay determination control unit 108, and is configured to generate at least one robustness index based on the delay data. The at least one robustness index is used to adaptively schedule the trips for the vehicle. For example, the robustness determination control unit 110 may adaptively schedule the trips for the vehicle, or, alternatively, a scheduling control unit 111 in communication with the robustness determination control unit 110 may adaptively schedule the trips based on the robustness index(es) (or indices).

As used herein, the term "control unit," "central processing unit," "unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the delay determination control unit 108 and the robustness determination control unit 110 (and the scheduling control unit 111) may be or include one or more processors that are configured to control operation of the adaptive scheduling system 100, as described herein. The delay determination control unit 108 and the robustness determination control unit 110 may be separate and distinct control units, or may be part of the same control unit.

The delay determination control unit 108 and the robustness determination control unit 110 (and the scheduling control unit 111) are configured to execute a set of instructions that are stored in one or more data storage units or elements (such as one or more memories), in order to process data. For example, the delay determination control unit 108 and the robustness determination control unit 110 (and the scheduling control unit 111) may include or be coupled to one or more memories. The data storage units may also store data or other information as desired or needed. The data storage units may be in the form of an information source or a physical memory element within a processing machine.

The set of instructions may include various commands that instruct the delay determination control unit 108 and the robustness determination control unit 110 (and the scheduling control unit 111) as processing machines to perform specific operations such as the methods and processes of the various embodiments of the subject matter described herein. The set of instructions may be in the form of a software program. The software may be in various forms such as system software or application software. Further, the software may be in the form of a collection of separate programs, a program subset within a larger program or a portion of a program. The software may also include modular programming in the form of object-oriented programming. The processing of input data by the processing machine may be in response to user commands, or in response to results of previous processing, or in response to a request made by another processing machine.

The diagrams of embodiments herein may illustrate one or more control or processing units, such as the delay determination control unit 108 and the robustness determination control unit 110 (and the scheduling control unit 111). It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the delay determination control unit 108 and the robustness determination control unit 110 may represent processing circuitry such as one or more of a field programmable gate array (FPGA), application specific integrated circuit (ASIC), microprocessor(s), and/or the like. The circuits in various embodiments may be configured to execute one or more algorithms to perform functions described herein. The one or more algorithms may include aspects of embodiments disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Figure 3 is a block diagram of an initially-scheduled duty 200 for a vehicle operator, according to an embodiment of the present disclosure. The initially-scheduled duty 200 is for an operator (such as a pilot or flight crew) of an aircraft. The initially-scheduled duty 200 includes a first leg 202, a second leg 204, and a third leg 206. The first leg 202 is a first flight having a scheduled departure time 208 (for example, 8:00 AM) from a first location, such as a first airport, and a scheduled arrival time 210 (for example, 9:10 AM) at a second location, such as a second airport. The second leg 204 is a second flight having a scheduled departure time 212 (for example, 10:10 AM) from the second location, and a scheduled arrival time 214 (for example, 11:30 AM) at a third location. The third leg 206 is a third flight having a scheduled departure time 216 (for example, 12:30 AM) from the third location, and a scheduled arrival time 218 (for example, 1:45 PM) at a fourth location. The scheduled arrival time 210 and the scheduled departure time 212 are separated by first scheduled ground time 220 at the second location, while the scheduled arrival time 214 and the scheduled departure time 216 are separated by second scheduled ground time 222.

The duty 200 represents an aircraft rotation, which is a sequence of planned flights and ground times, as shown in Figure 3. The duty 200 may include more or less legs than shown. For example, the duty may include a single leg, or four or more legs. Further, the legs may be between more or less than three locations. For example, the duty may include multiple flights between the same two locations. In at least one other embodiment, the duty 200 may include four legs in relation to four different locations.

Figure 4 is a block diagram of an actual duty 200' in relation to the initially-scheduled duty 200 for a vehicle operator, according to an embodiment of the present disclosure. The actual duty 200' represents the actual times of departures and arrival times of the legs 202', 204', and 206'. Note, the indicated clock times (as opposed to expected actual durations of each leg shown inside of the blocks) shown in Figure 4 are associated with the actual duty 200'. As shown, the actual duty 200' includes the leg 202', which is ten minutes longer than the leg 202 of the initially-scheduled duty 200. The longer actual flight time of the leg 202' extends into the initially-scheduled first scheduled ground time 220, thereby causing a departure delay for the second leg 204'. The longer-than-expected first leg 202' causes delays for the actual duty 200' that propagate therethrough.

As an example, on any given day, up to 50% of aircraft rotations may be broken (that is,. do not follow initial schedules). A delay of a first flight propagates along a duty and causes delays of subsequent flights and ground times, such as shown in Figure 4. Delays may be caused by, for example, a crew changing aircraft, inclement weather, anticipated aircraft maintenance, and/or the like. If a delay is long enough, a particular leg of a duty may need to be canceled. For example, if the second leg 204' is delayed such that the actual arrival time 214' is after the scheduled departure time 216, the third leg 206 may be canceled due to duty limits set for a flight crew. The limits may be set by an aircraft management entity, regulators, and/or the like.

In most cases, duty or rotation disruptions are caused by single rare events that are unpredictable (such as a mechanical failure or an unexpected crew sickness), and/or minor accumulated events that are predictable via statistical analysis. Such predictable events include historical weather conditions on a particular leg, historical flight arrivals and departures at particular locations (for example, airports) at various times of day, workload for personnel at the particular stations during different times of the day, and/or the like. Referring again to Figure 2, the delay determination control unit 108 determines the predictable flight disruptions based on the historical data stored in the flight history database 102, such as by analyzing the predictable flight disruptions and generating a delay propagation index to each leg of the entire duty. The delay determination control unit 108 may statistically analyze historical data for flights and ground times to determine a delay propagation index for the legs. In at least one embodiment, the robustness determination control unit 110 may then generate one or more robustness indices, which may be used to determine flight crew schedules for duties.

Initially, the delay determination control unit 108 analyzes historical data for one or more vehicles and/or at one or more locations (such as airports) stored in the flight history database 102. In at least one embodiment, the delay determination control unit 108 first determines a delay propagation index for a particular leg ($PD\_leg_i$) by determining a difference between a forecasted arrival time ($ArF\_leg_i$) and a scheduled arrival time ($ArS\_leg_i$). In particular, the delay determination control unit 108 determines the following:

$$PD\_leg_i = ArF\_leg_i - ArS\_leg_i$$

where $ArF\_leg_i$ is the scheduled arrival time for i-flight, and $ArF\_leg_i$ is the forecasted arrival time for i-flight.

For the entire duty, the delay determination control unit 108 defines a delay propagation index (Pd_duty) as a delay propagation index for the last flight in that particular duty, as follows:

$$Pd\_duty = PD\_leg_n, \; n \in N$$

where N is number of legs in the duty.

Then, the delay determination control unit 108 determines each $ArF\_leg_i$ via a forecasted flight departure time and a median value of historical block-time distribution for that particular flight as follows:

$$ArF\_leg_i = DpF\_leg_i + MdB\_leg_i$$

Where $ArF\_leg_i$ is a forecasted departure time for i-flight, $ArF\_leg_i$ is a forecasted arrival time for i-flight, and $MdB\_leg_i$ is a median value for historical block-time for i-flight. The delay determination control unit 108 recursively calculates $DpF\_leg_i$ as follows:

$$DpF\_leg_i = ArF\_leg_{i-1} + GtF\_leg_{i-1}(ArF\_leg_{i-1})$$

where $GtF\_leg_{i-1}(ArF\_leg_{i-1})$ is a conditional ground time, specific for each station (for example, airport), and $ArF\_leg_{i-1}$ is a forecasted arrival time for (i-1)-flight.

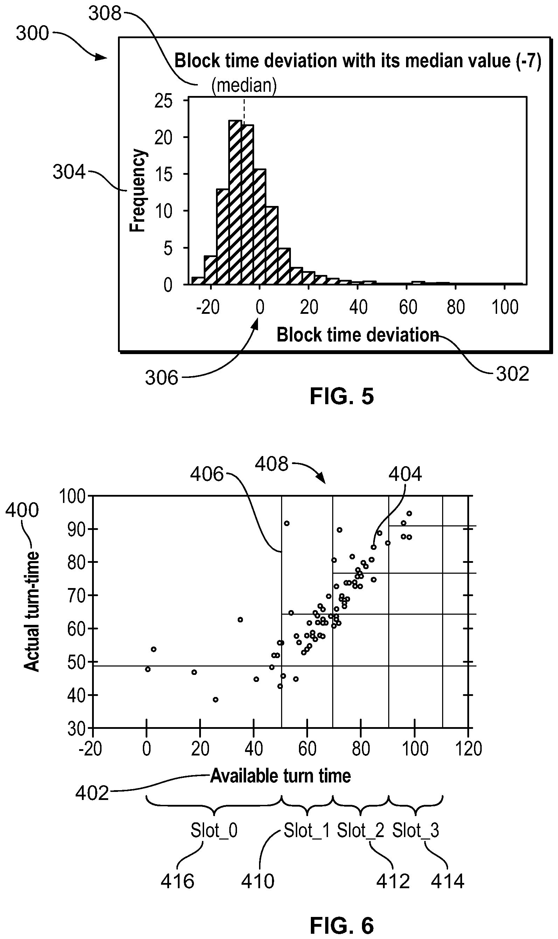

Figure 5 is an exemplary graph 300 of historical block time distribution for a trip, according to an embodiment of the present disclosure. The trip may be a flight between a first location and a second location over a predetermined time period. For example, the trip may be a flight between a departure airport and an arrival airport at a particular time of day over a year or longer. The graph includes a block time deviation axis 302 and a frequency axis 304. The block time deviation axis 302 lists deviations from scheduled arrivals, while the frequency axis 304 lists frequencies of such deviations. As shown, the deviation 0 shown by reference numeral 306 represents the scheduled time of arrival.

Referring to Figures 2 and 5, the delay determination control unit 108 analyzes the graph 300 and/or the data that is used to generate the graph 300, and determines that the median deviation 308 is minus 7 minutes. That is, the delay determination control unit 108 analyzes data stored in the flight history database 102 and determines that the median deviation 308 for the particular trip is minus 7 minutes. In other examples, a median deviation for a particular trip is greater than 0 (that is, a late arriving flight).

After determining the median deviation for a particular trip (such as shown in Figure 5), the delay determination control unit 108 then calculates the conditional ground time ($GtF\_leg_{i-1}(ArF\_leg_{i-1})$), specific for each station (for example, airport). In order to do so, in at least one embodiment, the delay determination control unit 108 generates an actual turn time vs. available turn time scatterplot to determine a recommended turn time.

Figure 6 is an exemplary graph of actual turn time 400 vs available turn time 402 scatterplot for a particular station (for example, airport), according to an embodiment of the present disclosure. Referring to Figures 1 and 6, the scatterplot shows various historical data points 404 regarding actual turn time and available turn time at a particular location. The historical data is stored in the flight history database 102, such as within the location history storage unit 106. Based on analysis of the actual turn time and available turn times at the location, the delay determination control unit 108 determines the recommended turn time 406, which is the bend point of the scatterplot. As shown in the example of Figure 6, the recommended turn time 406 is 48 minutes.

The available turn time is a time span between an actual arrival of a flight and the scheduled departure time of the flight. The actual turn time is a time span between the actual arrival of the flight and the actual departure of the flight.

Next, the delay determination control unit 108 divides all space on the scatterplot to the right 408 of the recommended turn-time 406 into time slots 410, 412, and 414. The length of each time slot 410, 412, and 414 may or may not be equal. With each time slot 410, 412, and 414, the delay determination control unit 108 determines a median value of available turn-time (as shown in Figure 6, the median value for each time slot 410, 412, and 414 is 20 minutes). The median value for time slot 416 (that is, Slot_0) corresponds to the recommended turn time 406. The time slots may be chosen to be greater or less than shown. In at least one embodiment, the media value for time slot 416 is based on actual turn-times, and historically measured.

The delay determination control unit 108 outputs delay data that is analyzed by the robustness determination control unit 110. For example, in at least one embodiment, the delay determination control unit 108 determines an estimated value of i-th leg arrival time (ArF legi), which is then analyzed by the robustness determination control unit 110. Based on the analysis, the robustness determination control unit 110 determines one or more flight duty robustness indices.

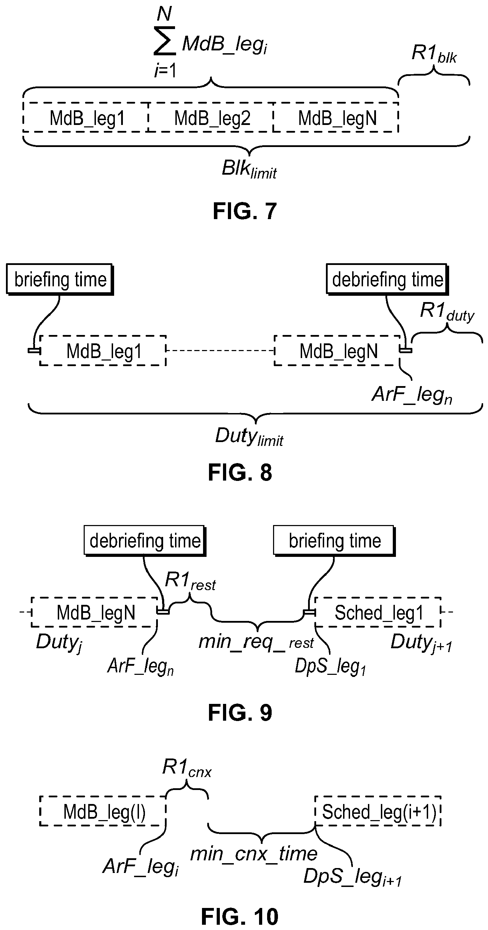

Figure 7 is a block diagram illustrating a block time robustness index $RI_{blk}$, according to an embodiment of the present disclosure. Referring to Figures 2 and 7, in at least one embodiment, the robustness determination control unit 110 determines the duty block time robustness index ($RI_{blk}$). The duty block time robustness index is the difference between the duty's limit of block-time $Blk_{limit}$ (defined, for example, by the U.S. Federal Aviation Administration) and the sum of median values for historical block-time for all flights within the duty. In this manner, the robustness determination control unit 110 is configured to predict available block time for a duty, which may then be used to schedule or adapt a particular duty and/or leg, for example.

Figure 8 is a block diagram illustrating a duty duty time robustness index $RI_{duty}$, according to an embodiment of the present disclosure. Referring to Figures 2 and 8, in at least one embodiment, the robustness determination control unit 110 determines the duty duty time robustness index ($RI_{duty}$). The robustness determination control unit 110 determines the duty duty time robustness index as follows:

$$RI_{duty} = Duty_{limit} - (ArF_{legn} + debriefing\_time), \quad n \in N$$

where $RI_{duty}$ is the duty duty time robustness index, $Duty_{limit}$ is a scheduled duty-time limit threshold on time (as defined, for example, by the U.S. Federal Aviation Administration), $ArF_{legn}$ is the forecasted arrival time for n-flight, briefing time is a predefined briefing time for the duty, debriefing time is a predefined debriefing time for the duty, and N is the number of legs in the duty. In this manner, the robustness determination control unit 110 is configured to predict available duty time, which may then be used to schedule or adapt a particular duty and/or leg, for example.

Figure 9 is a block diagram illustrating a duty rest time robustness index $RI_{rest}$, according to an embodiment of the present disclosure. Referring to Figures 2 and 9, in at least one embodiment, the robustness determination control unit 110 determines the duty rest time robustness index ($RI_{rest}$). The duty rest time robustness index is the difference between a scheduled minimum rest start time (for a following duty) and the previous duty's forecasted arrival time, adjusted by a predefined debriefing time. The robustness determination control unit 110 determines the duty rest time robustness index as follows:

$$RI_{rest} = DpS\_leg_1 - (briefing\_time + min\_req\_rest))_{j+1} - (ArF_{legn} + debriefing\_time)_j, \quad n \in N$$

where $RI_{rest}$ is the duty rest time robustness index, min_req_rest is a minimum required rest time limit for a duty (as defined, for example, by the U.S. Federal Aviation Administration), $DpS\_leg_i$ is a scheduled departure time for 1 flight of (j+1) duty, $ArF_{legn}$ is a forecasted arrival time for n-flight of j-duty, briefing_time is a predefined briefing time for (j+1) duty, debriefing time is a predetermined debriefing time for j-duty, and N is the number of legs in the j-th duty. In this manner, the robustness determination control unit 110 is configured to predict available rest time for a duty, which may then be used to schedule or adapt a particular duty and/or leg, for example.

Figure 10 is a block diagram illustrating a flight connection time robustness index $RI_{cnx}$, according to an embodiment of the present disclosure. Referring to Figures 2 and 10, in at least one embodiment, the robustness determination control unit 110 determines the flight connection time robustness index ($RI_{rest}$). The flight connection time robustness index is the difference between a minimum connection start time (defined as following a flight's scheduled start minus a minimum connection time) and a current flight's forecasted arrival time. The robustness determination control unit 110 determines the flight connection time robustness index as follows:

$$RI_{cnx} = (DpS\_leg_{i+1} - min\_cnx\_time) - ArF_{legi}$$

where $RI_{cnx}$ is the flight connection time robustness index, $ArF_{legi}$ is a forecasted arrival time for i-flight of a duty, $DpS\_leg_{i+1}$ is a scheduled departure time for (i+1)-flight of the same duty, and min_cnx_time is a minimum connection time, which is predefined for a given aircraft type. In this manner, the robustness determination control unit 110 is configured to predict available flight connection times, which may then be used to schedule or adapt a particular duty and/or leg, for example.

Referring to Figures 2 and 7-10, the robustness determination control unit 110 may determine all of the described robustness indices. By determining all four robustness indices, the robustness determination control unit 110 provides increased, detailed analysis that may then be used to adaptively schedule both duties and legs within the duties. Alternatively, the robustness determination control unit 110 may determine less than all of the described robustness indices.

Referring to Figures 2-10, the delay determination control unit 108 analyzes historical data for one or more vehicles and/or at one or more locations (such as airports) stored in the flight history database 102, and then determines one or more delay propagation indices for one or more duties and/or legs. For example, the delay determination control unit 108 determines a delay propagation index for a particular leg and/or duty. Based on the a determination of the delay propagation as set forth in one or more delay propagation indices as determined by the delay determination control unit 108, the robustness determination control unit 110 determines one or more robustness indices.

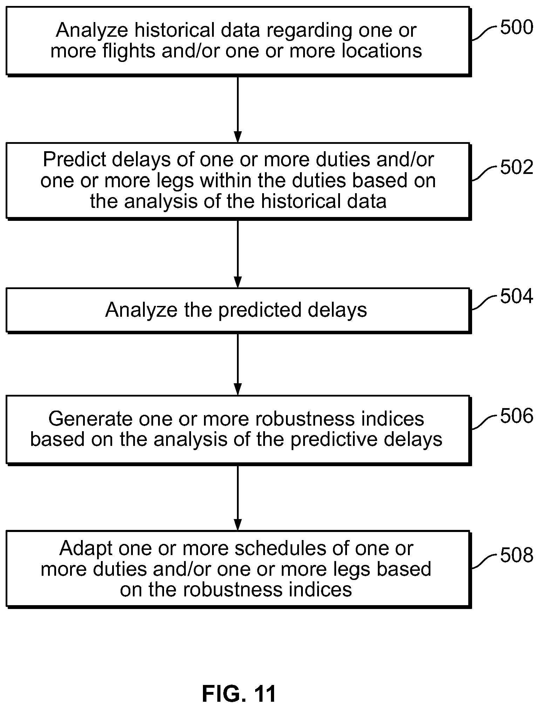

Figure 11 illustrates a flow chart of an adaptive scheduling method, according to an embodiment of the present disclosure. Referring to Figures 2 and 11, the method begins at 500, at which the delay determination control unit 108 analyzes historical data regarding one or more trips (for example, flights) and/or one or more locations (for example, airports). At 502, the delay determination control unit 108 predicts delays of one or more duties and/or one or more legs within the duties based on the analysis of the historical data. In at least one embodiment, the delay determination control unit 108 predicts the delays by determining at least one delay propagation index for a particular duty and/or leg.

At 504, the robustness determination control unit 110 analyzes the predicted delays, as generated by the delay determination control unit 108. At 506, the robustness determination control unit 110 generates one or more robustness indices based on the analysis of the predicted delays. At 508, the robustness determination control unit 110 (and/or a separate and distinct scheduling control unit 111) adapts one or more schedules of one or more duties and/or one or more legs based on the robustness indices.

Embodiments of the present disclosure provide systems and methods that allow large amounts of data to be quickly and efficiently analyzed by a computing device. For example, thousands of flights travel into and out of thousands of airports every day. The vast amounts of data are efficiently organized and/or analyzed by the systems and methods, as described above. The systems and methods analyze the data in a relatively short time so that efficient flight schedules (including duties and legs therein) may be generated. A human being would be incapable of analyzing such vast amounts of data in such a short time. As such, embodiments of the present disclosure provide increased and efficient functionality, and vastly superior performance in relation to a human being analyzing the immense amounts of data. In short, embodiments of the present disclosure provide systems and methods that are configured to generate and analyze millions of calculations and computations that a human being is incapable of efficiently, effectively and accurately managing.

As described herein, embodiments of the present disclosure provide systems and methods for determining potential flight delays, and adaptively scheduling legs of a duty based on the potential flight delays. Further, embodiments of the present disclosure provide systems and methods for reducing the possibility of flight personnel (such as pilots) from being prevented from completing legs of a duty due to potential flight delays. Moreover, embodiments of the present disclosure provide systems and methods for determining flight schedules for flight personnel that reduce potential conflicts with particular operational rules between legs of a duty. Further, embodiments of the present disclosure provide systems and methods that increase the likelihood that flight crews and airlines do not violate government regulations in relation to flight crew/pilot duties.

Further, the disclosure comprises embodiments according to the following clauses:

Clause 1. An adaptive scheduling system that is configured to adaptively schedule flights for an aircraft, the adaptive scheduling system comprising:

a flight history database that stores historical data regarding one or both of the aircraft and one or more locations to and from which the aircraft travels;

a delay determination control unit in communication with the flight history database, wherein the delay determination control unit is configured to predict one or more delays for the aircraft based on an analysis of the historical data, and wherein the delay determination control unit is further configured to generate delay data for the aircraft indicative of the one or more delays; and

a robustness determination control unit in communication with the delay determination control unit, wherein the robustness determination control unit is configured to generate at least one robustness index based on the delay data, and wherein the at least one robustness index is used to adaptively schedule the flights for the aircraft.

Clause 2. The adaptive scheduling system of clause 1, wherein the flight history database comprises:

a vehicle history storage unit that stores flight history data for the aircraft; and

a location history storage unit that stores location history data regarding arrival and departure history for one or more locations.

Clause 3. The adaptive scheduling system of any one of clauses 1-2, wherein the robustness determination control unit is configured to generate the at least one robustness index for one or both of at least one duty and at least one leg within the at least one duty.

Clause 4. The adaptive scheduling system of any one of clauses 1-3, wherein the delay determination control unit is configured to generate the delay data by determining at least one delay propagation index for one or both of at least one duty and at least one leg of the at least one duty.

Clause 5. The adaptive scheduling system of clause 4, wherein the delay determination control unit is configured to determine the at least one delay propagation index for the at least one leg by determining a difference between a forecasted arrival time and a scheduled arrival time.

Clause 6. The adaptive scheduling system of clause 4 or 5, wherein the delay determination control unit is further configured to define the at least one delay propagation index in relation to a last flight in the at least one duty.

Clause 7. The adaptive scheduling system of any of clauses 4-6, wherein the delay determination control unit is further configured to determine a forecasted departure time for each leg within a duty, a forecasted arrival time for each leg within the duty, and a median value of historical time distribution for each leg within the duty.

Clause 8. The adaptive scheduling system of any one of clauses 1-7, wherein the at least one robustness index comprises a duty block time robustness index.

Clause 9. The adaptive scheduling system of any one of clauses 1-8, wherein the at least one robustness index comprises a duty duty time robustness index.

Clause 10. The adaptive scheduling system of any one of clauses 1-9, wherein the at least one robustness index comprises a duty rest time robustness index.

Clause 11. The adaptive scheduling system of any one of clauses 1-10, wherein the at least one robustness index comprises a flight connection time robustness index.

Clause 12. An adaptive scheduling method that is configured to adaptively schedule flights for an aircraft, the adaptive scheduling method comprising:

storing historical data regarding one or both of the aircraft and one or more locations to and from which the aircraft travels in a flight history database;

communicatively coupling a delay determination control unit with the flight history database;

predicting, by the delay determination control unit, one or more delays for the aircraft based on an analysis of the historical data, wherein the predicting comprises generating, by the delay determination control unit, delay data for the aircraft indicative of the one or more delays;

communicatively coupling a robustness determination control unit with the delay determination control unit;

generating, by the robustness determination control unit, at least one robustness index based on the delay data; and

using the at least one robustness index to adaptively schedule the flights for the aircraft.

Clause 13. The adaptive scheduling method of clause 12, wherein the generating, by the robustness determination control unit, at least one robustness index based on the delay data comprises generating the at least one robustness index for one or both of at least one duty and at least one leg within the at least one duty.

Clause 14. The adaptive scheduling method of any one of clauses 12-13, wherein the predicting, by the delay determination control unit, comprises generating the delay data by determining at least one delay propagation index for one or both of at least one duty and at least one leg of the at least one duty.

Clause 15. The adaptive scheduling method of clause 14, wherein the predicting, by the delay determination control unit, comprises determining the at least one delay propagation index for the at least one leg by determining a difference between a forecasted arrival time and a scheduled arrival time.

Clause 16. The adaptive scheduling method of clause 15, wherein the predicting, by the delay determination control unit, comprises defining the at least one delay propagation index in relation to a last flight in the at least one duty.

Clause 17. The adaptive scheduling method of clause 16, wherein the predicting, by the delay determination control unit, comprises determining a forecasted departure time for each leg within a duty, a forecasted arrival time for each leg within the duty, and a median value of historical time distribution for each leg within the duty.

Clause 18. The adaptive scheduling method of any one of clauses 12-17, wherein the at least one robustness index comprises one or more of a duty block time robustness index, a duty duty time robustness index, a duty rest time robustness index, and a flight connection time robustness index.

Clause 19. An adaptive scheduling system that is configured to adaptively schedule flights for an aircraft, the adaptive scheduling system comprising:

a flight history database that stores historical data regarding one or both of the aircraft and one or more locations to and from which the aircraft travels, wherein the flight history database includes a vehicle history storage unit that stores flight data for the aircraft, and a location history storage unit that stores location history data regarding arrival and departure history for one or more locations;

a delay determination control unit in communication with the flight history database, wherein the delay determination control unit is configured to predict one or more delays for the aircraft based on an analysis of the historical data, and wherein the delay determination control unit is further configured to generate delay data for the aircraft indicative of the one or more delays;

a robustness determination control unit in communication with the delay determination control unit, wherein the robustness determination control unit is configured to generate a plurality of robustness indices for one or both of at least one duty and at least one leg within the at least one duty based on the delay data, wherein the plurality of robustness indices comprise a duty block time robustness index, a duty duty time robustness index, a duty rest time robustness index, and a flight connection time robustness index; and

a scheduling control unit that is configured to use the plurality of robustness indices to adaptively schedule the trips for the vehicle.

Clause 20. The adaptive scheduling system of clause 19, wherein the delay determination control unit is configured to:

generate the delay data by determining at least one delay propagation index for one or both of at least one duty and at least one leg of the at least one duty,

determine the at least one delay propagation index for the at least one leg by determining a difference between a forecasted arrival time and a scheduled arrival time,

define the at least one delay propagation index in relation to a last flight in the at least one duty, and

determine a forecasted departure time for each leg within a duty, a forecasted arrival time for each leg within the duty, and a median value of historical time distribution for each leg within the duty.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and may include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

**Claims**

1. An adaptive scheduling system (100) that is configured to adaptively schedule flights for an aircraft (10), the adaptive scheduling system (100) comprising:

   a flight history database (102) that stores historical data regarding one or both of the aircraft (10) and one or more locations to and from which the aircraft (10) travels;
   a delay determination control unit (108) in communication with the flight history database (102), wherein the delay determination control unit (108) is configured to predict one or more delays for the aircraft (10) based on an analysis of the historical data, and wherein the delay determination control unit (108) is further configured to generate delay data for the aircraft (10) indicative of the one or more delays; and
   a robustness determination control unit (110) in communication with the delay determination control unit (108), wherein the robustness determination control unit (110) is configured to generate at least one robustness index based on the delay data, and wherein the at least one robustness index is used to adaptively schedule the flights for the aircraft (10).

2. The adaptive scheduling system (110) of claim 1, wherein the flight history database (102) comprises:

   a vehicle history storage unit (104) that stores flight history data for the aircraft; and
   a location history storage unit (106) that stores location history data regarding arrival and departure history for one or more locations.

3. The adaptive scheduling system (100) of any of claims 1-2, wherein the robustness determination control unit (110) is configured to generate the at least one robustness index for one or both of at least one duty and at least one leg within the at least one duty.

4. The adaptive scheduling system (100) of any of claims 1-3, wherein the delay determination control unit (108) is configured to generate the delay data by determining at least one delay propagation index for one or both of at least one duty and at least one leg of the at least one duty, wherein optionally the delay determination control unit (108) is configured to determine the at least one delay propagation index for the at least one leg by determining a difference between a forecasted arrival time and a scheduled arrival time, wherein optionally the delay determination control unit (108) is further configured to define the at least one delay propagation index in relation to a last flight in the at least one duty, and wherein optionally the delay determination control unit (108) is further configured to determine a forecasted departure time for each leg within a duty, a forecasted arrival time for each leg within the duty, and a median value of historical time distribution for each leg within the duty.

5. The adaptive scheduling system (100) of any of claims 1-4, wherein the at least one robustness index comprises a duty block time robustness index.

6. The adaptive scheduling system (100) of any of claims 1-5, wherein the at least one robustness index comprises a duty duty time robustness index.

7. The adaptive scheduling system (100) of any of claims 1-6, wherein the at least one robustness index comprises a duty rest time robustness index.

8. The adaptive scheduling system (100) of any of claims 1-7, wherein the at least one robustness index comprises a flight connection time robustness index.

9. An adaptive scheduling method that is configured to adaptively schedule flights for an aircraft (10), the adaptive scheduling method comprising:

storing historical data regarding one or both of the aircraft (10) and one or more locations to and from which the aircraft (10) travels in a flight history database (102);
communicatively coupling a delay determination control unit (108) with the flight history database (102);
predicting, by the delay determination control unit (108), one or more delays for the aircraft (10) based on an analysis of the historical data, wherein the predicting comprises generating, by the delay determination control unit (108), delay data for the aircraft (10) indicative of the one or more delays;
communicatively coupling a robustness determination control unit (108) with the delay determination control unit (108);
generating, by the robustness determination control unit (108), at least one robustness index based on the delay data; and
using the at least one robustness index to adaptively schedule the flights for the aircraft (10).

10. The adaptive scheduling method of claim 9, wherein the generating, by the robustness determination control unit (108), at least one robustness index based on the delay data comprises generating the at least one robustness index for one or both of at least one duty and at least one leg within the at least one duty.

11. The adaptive scheduling method of any of claims 9-10, wherein the predicting, by the delay determination control unit (108), comprises generating the delay data by determining at least one delay propagation index for one or both of at least one duty and at least one leg of the at least one duty.

12. The adaptive scheduling method of claim 11, wherein the predicting, by the delay determination control unit (108), comprises determining the at least one delay propagation index for the at least one leg by determining a difference between a forecasted arrival time and a scheduled arrival time.

13. The adaptive scheduling method of claim 12, wherein the predicting, by the delay determination control unit (108), comprises defining the at least one delay propagation index in relation to a last flight in the at least one duty.

14. The adaptive scheduling method of claim 13, wherein the predicting, by the delay determination control unit (108), comprises determining a forecasted departure time for each leg within a duty, a forecasted arrival time for each leg within the duty, and a median value of historical time distribution for each leg within the duty.

15. The adaptive scheduling method of any of claims 9-14, wherein the at least one robustness index comprises one or more of a duty block time robustness index, a duty duty time robustness index, a duty rest time robustness index, and a flight connection time robustness index.

FIG. 1

100

Adaptive Scheduling System

102

Flight history
database

108

Delay determination
control unit

104

Aircraft history
Storage Unit

110

Robustness determination
control unit

106

Location history
Storage Unit

111

Scheduling control unit

**FIG. 2**

200

212          216

202    220          204    222          206

208    Flt1: 1:10          Flt2: 1:20          Flt3: 1:15    218

8:00          9:10    10:10          11:30    12:30          13:45

210          214

**FIG. 3**

200'

202'          204'          206'

214'

Flt1: 1:20          Flt2: 1:25          Flt3: 1:25

208    Flt1: 1:10          Flt2: 1:20          Flt3: 1:15

8:00          9:20    10:25          11:50    12:55          14:30

202          220          204          222    216          206

200

**FIG. 4**

**FIG. 5**

**FIG. 6**

$$\sum_{i=1}^{N} MdB\_leg_i \qquad R1_{blk}$$

| MdB_leg1 | MdB_leg2 | MdB_legN |
|----------|----------|----------|

$$Blk_{limit}$$

**FIG. 7**

briefing time        debriefing time

| MdB_leg1 | - - - - - - - | MdB_legN |

$$R1_{duty}$$

$$ArF\_leg_n$$

$$Duty_{limit}$$

**FIG. 8**

debriefing time     briefing time

$$R1_{rest}$$

| MdB_legN | | Sched_leg1 |

$$Duty_j \qquad min\_req\_rest \qquad Duty_{j+1}$$

$$ArF\_leg_n \qquad DpS\_leg_1$$

**FIG. 9**

$$R1_{cnx}$$

| MdB_leg(I) | | Sched_leg(i+1) |

$$ArF\_leg_i \qquad min\_cnx\_time \qquad DpS\_leg_{i+1}$$

**FIG. 10**

```
┌─────────────────────────────────────────┐
│  Analyze historical data regarding one or │  ⌐500
│  more flights and/or one or more locations│
└─────────────────────────────────────────┘
                    │
                    ▼
┌─────────────────────────────────────────┐
│  Predict delays of one or more duties and/or │  ⌐502
│  one or more legs within the duties based on │
│      the analysis of the historical data     │
└─────────────────────────────────────────┘
                    │
                    ▼
┌─────────────────────────────────────────┐
│         Analyze the predicted delays       │  ⌐504
└─────────────────────────────────────────┘
                    │
                    ▼
┌─────────────────────────────────────────┐
│   Generate one or more robustness indices  │  ⌐506
│  based on the analysis of the predictive delays │
└─────────────────────────────────────────┘
                    │
                    ▼
┌─────────────────────────────────────────┐
│    Adapt one or more schedules of one or   │  ⌐508
│  more duties and/or one or more legs based │
│          on the robustness indices         │
└─────────────────────────────────────────┘
```

**FIG. 11**

Europäisches
Patentamt

European
Patent Office

Office européen
des brevets

**EUROPEAN SEARCH REPORT**

Application Number

EP 18 17 8215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 093 808 A1 (BOEING CO [US]) 16 November 2016 (2016-11-16) * paragraphs [0008] - [0011]; figure 1 * | 1-15 | INV. G06Q10/06 G06Q10/04 |
| X | US 2016/371988 A1 (WEBER VALENTIN [AU] ET AL) 22 December 2016 (2016-12-22) * figures 1, 4 * | 1-15 | |
| X | US 2012/226647 A1 (MURRAY GEOFFREY C [US] ET AL) 6 September 2012 (2012-09-06) * paragraphs [0036], [0037]; figure 2 * | 1-15 | |

| | |
|---|---|
| | **TECHNICAL FIELDS SEARCHED (IPC)** |
| | G06Q |

The present search report has been drawn up for all claims

| Place of search | Date of completion of the search | Examiner |
|---|---|---|
| Munich | 18 July 2018 | Flores Sanchez, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 418 959 A1**

## ANNEX TO THE EUROPEAN SEARCH REPORT
## ON EUROPEAN PATENT APPLICATION NO.

EP 18 17 8215

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2018

| Patent document cited in search report | | Publication date | Patent family member(s) | | Publication date |
|---|---|---|---|---|---|
| EP 3093808 | A1 | 16-11-2016 | CN | 106156940 A | 23-11-2016 |
| | | | EP | 3093808 A1 | 16-11-2016 |
| | | | JP | 2017037631 A | 16-02-2017 |
| | | | US | 2016335584 A1 | 17-11-2016 |
| US 2016371988 | A1 | 22-12-2016 | NONE | | |
| US 2012226647 | A1 | 06-09-2012 | NONE | | |

For more details about this annex : see Official Journal of the European Patent Office, No. 12/82